# EUROPÄISCHE PATENTANMELDUNG

(11) **EP 3 017 919 A2**
(43) Veröffentlichungstag der Anmeldung: **11.05.2016**
(21) Anmeldenummer: 15193165.6
(22) Anmeldetag: 05.11.2015
(51) Int. Cl.: B25J 9/16, B25J 9/06

(54) **EVENT-BASIERTE REDUNDANZWINKELKONFIGURATION FÜR GELENKARMROBOTER**

(30) Priorität: 07.11.2014 DE 102014222809
(71) Anmelder: KUKA Roboter GmbH, 86165 Augsburg (DE)
(72) Erfinder: FUCHSBERGER, Bettina, 86152 Augsburg (DE)
(74) Vertreter: Heselberger, Johannes

(57) **Zusammenfassung**

Die Erfindung betrifft ein Verfahren und ein System zum Steuern eines Roboters, welcher mindestens einen redundanten Freiheitsgrad hat. Durch das erfindungsgemäße Verfahren wird verhindert, dass der Roboter aufgrund seiner Redundanz mit der Umgebung kollidiert und/oder in eine ungünstige Position gerät, ohne dass der Werkzeugmittelpunkt nachteilhaft verfahren wird.

## Beschreibung

### 1. Technischer Bereich

Die vorliegende Erfindung betrifft allgemein ein Verfahren zum Steuern eines Manipulators, insbesondere eines handgeführten mehrachsigen Gelenkarmroboters, welcher mindestens einen redundanten Freiheitsgrad hat.

### 2. Technischer Hintergrund

Manipulatoren, wie insbesondere Industrieroboter, werden für verschiedene Arbeitsprozesse in beispielsweise der Montage oder Fertigung im industriellen Umfeld eingesetzt. Ein Industrieroboter ist ein automatisch gesteuerter, frei programmierbarer Manipulator, der in drei oder mehr Achsen programmierbar ist. Industrieroboter können dabei beweglich oder an einem festen Ort eingesetzt werden.

Ein Gelenkarmroboter, oder Knickarmroboter, ist ein dreidimensional beweglicher Industrieroboter, welcher aus mehreren Drehgelenken aufgebaut ist. Üblicherweise sind die Drehgelenke mit Armgliedern verbunden, und jedes Drehgelenk ist durch eine Gelenkachse ausgezeichnet. Häufig werden Gelenkarmroboter mit sechs Gelenken ausgestattet, um jeden der sechs möglichen kartesischen Freiheitsgrade möglichst durch eine Gelenkachse abzubilden. Wenn ein Roboter sechs oder weniger Freiheitsgrade aufweist, ist die Position und Orientierung der einzelnen Armglieder durch die Position des Werkzeugmittelpunkts (tool center point, TCP) in der Regel eindeutig definiert.

Wenn der Manipulator allerdings mehr als sechs Freiheitsgrade bzw. mehr als sechs Gelenkachsen aufweist, stellen die siebte und jede weitere Achse eine Überbestimmtheit dar. Bei einem ortsfesten TCP können somit verschiedene Konfigurationen der Gelenke und Armglieder vorliegen. Der Manipulator weist also zusätzliche Freiheitsgrade auf, die als redundant angesehen werden. Allgemein weisen redundante Manipulatoren mehr Gelenkachsen als kartesische Freiheitsgrade auf. Ein Manipulator mit einer redundanten siebten Achse zeichnet sich dabei vorteilhaft durch erhöhte Flexibilität aus, da bei festem TCP - d.h. wenn die Position und Orientierung des TCP im Raum unverändert bleibt - der Manipulator mehrere Haltungen einnehmen kann. Diese erhöhte Flexibilität, oder flexible Geschicklichkeit, kann beispielsweise zur Kollisionsvermeidung genutzt werden.

Allerdings kann dabei ein redundanter Manipulator auch ungewollte Haltungen einnehmen. So lässt sich leicht vorstellen, dass bei einem Gelenkarmroboter mit 7 Gelenken das redundante (i.d.R. das mittlere oder auch Ellenbogengelenk) Gelenk eine redundante Bewegung durchführen kann. So kann beispielsweise, aufgrund einer Redundanz in einem Ellenbogengelenk eines Gelenkarmroboters, dieses Gelenk ungewollt nach unten abfallen bzw. verfahren, und die Ausführung späterer Bewegungen behindern. Dies kann insbesondere auftreten, wenn der Gelenkarmroboter im kraftkompensierten Modus, in dem beispielsweise die Wirkung der Gravitation auf die Glieder des Manipulators kompensiert wird, handgeführt wird. Hierbei kann ein Ellenbogengelenk beispielsweise in einen ungünstigen Bereich driften, und mit der Umgebung oder dem Bediener kollidieren. Weiterhin kann der Gelenkarmroboter beim Handführen in eine ungünstige Haltung kommen, sodass der Roboter nur durch manuelles Umorientieren des Ellenbogenwinkels weiterbewegt werden kann. Folglich muss der Bediener in diesem Fall nachteilhaft beide Hände benutzen um den Roboter zu steuern.

In dem Dokument WO 2014/043702 A1 wird ein System und eine Methode beschrieben, um die Bewegung eines Roboters mit redundanten Freiheitsgraden zu beschränken. Um zu verhindern, dass sich die Haltung eines Roboters nicht unkontrolliert verändert, wenn der Roboter im kraftkompensierten Modus handgeführt wird, wird vorgeschlagen, die redundanten Freiheitsgrade des Roboters einzuschränken, indem einschränkende Kräfte oder Drehmomente intern auf die Gelenke ausgeübt werden, um den Roboterarm zu einer bevorzugten Konfiguration zu zwingen. Folglich wird die Beweglichkeit des Roboters grundsätzlich eingeschränkt.

Weiterhin ist es im Stand der Technik bekannt, einen redundanten Roboter zu einer 6-Achs-Kinematik zu degradieren, indem z. B. des Ellenbogengelenks festgestellt oder blockiert wird. Weiterhin ist eine Umorientierung des Ellenbogengelenks bei festgestelltem TCP (entspricht einer Nullraumbewegung) für redundante Roboter bekannt. Allerdings existiert kein Verfahren um das Verhalten eines Ellenbogengelenks optimal zu steuern, während der Roboter insbesondere im kraftkompensierten Modus handgeführt wird.

Im Hinblick auf den oben erläuterten Stand der Technik ist es das Ziel der vorliegenden Erfindung, ein Verfahren und ein System bereitzustellen, welches es erlaubt, das Verhalten des Ellenbogengelenks eines Manipulators im handgeführten Modus zu optimieren. Dabei soll insbesondere verhindert werden, dass beispielsweise das Ellenbogengelenk frei oder über eine bestimmte Position bzw. über einen bestimmten Winkel hinaus bewegt bzw. verfahren wird. Ein weiteres Ziel der vorliegenden Erfindung ist es ein Driften der Haltung eines redundanten Manipulators in eine unerwünschte Position zu verhindern. Die Aufgabe wird mit dem Verfahren gemäß Anspruch 1 und dem Manipulatorsystem gemäß Anspruch 10 gelöst.

### 3. Inhalt der Erfindung

Das erfindungsgemäße Verfahren betrifft das Steuern eines handgeführten mehrachsigen Manipulators, wie etwa eines Gelenkarmroboters, dessen Achsen mit Momentsensoren zur Erfassung der an den Achsen wirkenden Drehmomente versehen sind. Aufgrund seiner Achsenanordnung weist der Manipulator dabei mindestens einen redundanten Freiheitsgrad auf. Der Manipulator kann in mindestens einem seiner Freiheitsgrade mittels Nachgiebigkeitsregelung betrieben werden, welche einen kraft- und/oder momentengeregelten Betrieb ermöglicht. Solch eine Nachgiebigkeitsregelung kann dabei insbesondere mittels einer Impedanzregelung, einer Admittanzregelung, einer Positionsregelung oder einer Drehmomentenregelung erfolgen. Üblicherweise wird der handgeführte Manipulator direkt am Endeffektor, d.h. dem Werkzeugmittelpunkt, geführt und der Bediener konzentriert sich dabei lediglich auf die Bewegung des Endeffektors.

Die vorliegende Erfindung ermöglicht es dem Manipulator sich frei innerhalb eines definierten Bereiches zu bewegen, ohne die Möglichkeiten der Bedienung einzuschränken. Dabei wird gemäß dem Verfahren für mindestens ein Gelenk des mehrachsigen Manipulator ein Bereich definiert, in welchem sich dieses Gelenk frei entsprechend der Gesamtbewegung des Manipulator bewegen kann. In anderen Worten, wenn der Manipulator entsprechend der handgeführten Bewegung seine Haltung verändert, kann sich das Gelenk in einem für dieses Gelenk definierten Bereich bewegen, ohne dass auf diese Bewegung eingewirkt werden muss. Vorteilhaft ist der Bereich so definiert, dass eine Kollision des entsprechenden Gelenks mit der Umgebung und/oder dem Bediener vermieden wird. Alternativ oder zusätzlich kann der Bereich auch so definiert sein, dass eine Bewegung des entsprechenden Gelenks in eine unvorteilhafte Position vermieden wird.

In einem weiteren Schritt wird festgestellt, ob ein Gelenk eine Grenze des für das Gelenk definierten Bereichs erreicht hat. Es wird also festgestellt, ob durch die handgeführte Bewegung ein Gelenk eine Grenze des Bereichs erreicht hat, welcher für dieses Gelenk definiert wurde.

In einem folgenden Schritt wird die Bewegung des Manipulators angepasst, wenn festgestellt wurde, dass das Gelenk die Grenze des für das Gelenk definierten Bereichs erreicht hat. Dabei wird die Bewegung derart angepasst, dass einer Bewegung des Gelenks durch die Grenze hindurch entgegengewirkt wird, ohne dass der Werkzeugmittelpunkt des Manipulators aufgrund dieses Entgegenwirkens verfahren wird. Insbesondere wird, wenn ein Gelenk eine Grenze für einen Bereich erreicht hat, in dem es sich frei bewegen kann, die Bewegung des Manipulators derart angepasst, dass sich das Gelenk nicht frei durch die Grenze des Bereichs hindurch bewegen kann. Dabei wird die Bewegung unter Ausnutzung des redundanten Freiheitsgrades so angepasst, dass der Werkzeugmittelpunkt des Manipulators vorteilhaft nicht (d.h. ohne wesentliche Störung des Arbeitsprozesses) verfahren wird, d.h. nicht verschoben oder verdreht bzw. verkippt wird. Die Position und Orientierung des TCP im Raum bleibt also im Wesentlichen unverändert.

Wenn ein Gelenk ein entsprechend für das Gelenk definierten Bereich verlässt, wird durch ein entsprechendes Anpassen der Bewegung des Manipulators verhindert, dass sich ein Gelenk von einem für das Gelenk definierten Bereich entfernt und der Manipulator dadurch eine unvorteilhafte Haltung einnimmt. Dabei betrifft die vorliegende Erfindung insbesondere Manipulatoren, die mehrere Achsen aufweisen, wobei vorzugsweise alle Achsen, und zumindest die für den Betrieb wesentlichen Achsen, kraft- bzw. momentgeregelt betrieben werden können. Vorteilhaft wird die Bewegung des Manipulators durch das erfindungsgemäße Verfahren erst angepasst, wenn ein Gelenk eine für das Gelenk definierte Bereichsgrenze erreicht hat, sodass ansonsten die volle Flexibilität des redundanten Roboters genutzt werden kann.

Durch dieses Verfahren wird vorteilhaft ermöglicht, dass die Bewegung des Manipulators erst eingeschränkt wird, wenn ein Gelenk, wie beispielsweise ein Ellenbogengelenk, eine definierte Bereichsgrenze erreicht hat. Somit wird ermöglicht, alle Freiheitsgrade des Manipulators und die dadurch resultierende hohe Flexibilität zu nutzen. Dabei wird verhindert, dass der Bediener beide Hände benutzen muss, um zu verhindern, dass der Manipulator unvorteilhafte Haltungen einnimmt. Generell bevorzugt umfasst das Anpassen der Bewegung des Manipulators in Reaktion auf das Feststellen (das Detektieren), dass ein Gelenk eine Grenze des für das Gelenk definierten Bereichs erreicht hat, eine Veränderung der Steifigkeit der Gelenke des Manipulators und/oder ein Aufschalten einer Kraft. Dabei versteht der Fachmann, dass durch eine Veränderung der Steifigkeit die Dämpfung eines Gelenks verändert wird. Ein derartiges Anpassen der Steifigkeit erfolgt durch ein entsprechendes Steuern der entsprechenden Motoren, sodass der Widerstand der Bewegung verändert wird. Alternativ kann auch die Nullraumsteifigkeit für das Gelenk erhöht werden. Durch das Aufschalten einer Kraft wird einer Bewegung des Gelenks entgegengewirkt, sodass das Gelenk nicht aus dem erlaubten Bereich in eine verbotene Zone rutschen oder fallen kann. Vorzugsweise betrifft dabei das Anpassen der Bewegung genau jenes Gelenk, welches eine Grenze des für das Gelenk definierten Bereichs erreicht hat. Weiterhin vorzugsweise betrifft das Anpassen der Bewegung dabei keines der anderen Gelenke.

Vorzugsweise weist der Manipulator zumindest sechs Achsen A1-A6 auf, mehr bevorzugt zumindest sieben Achsen A1-A7. Dabei wird durch das Anpassen der Bewegung die Steifigkeit der redundanten Gelenke der Achsen A3 und/oder A4 verändert, wobei die Gelenke der Achsen A3 und/oder A4 vorzugsweise ein Ellenbogengelenk des Manipulators definieren.

Generell bevorzugt umfasst das Anpassen der Bewegung eine Positionsänderung des Gelenks und der angrenzenden Arme, welches die Grenze des für das Gelenk definierten Bereichs erreicht hat. Somit wird die tatsächliche Position des entsprechenden Gelenks aktiv kommandiert und somit eine mögliche Kollision des Gelenks mit der Umgebung verhindert. Diese Positionsänderung kann alternativ oder zusätzlich zu den oben beschriebenen Reaktionsmöglichkeiten für das Gelenk erfolgen, das eine Grenze erreicht hat.

Vorzugsweise umfasst das Feststellen (das Detektieren), ob sich ein Gelenk des Manipulators außerhalb eines für das Gelenk definierten Arbeitsbereich befindet, ein ermitteln steigender und/oder fallender Flanken. Bei Signalen sind die Signalflanken die Übergänge zwischen den Signalzuständen high (H) und low (L), und werden als steigende und fallende Flanke bezeichnet. Weiterhin vorzugsweise wird das Feststellen durchgeführt, während der Manipulator im kraftkompensierten Modus handgeführt wird.

Durch das erfindungsgemäße Verfahren wird die Haltung eines redundanten Manipulators dann korrigiert, bzw. die Bewegung einzelner Gelenke dann angepasst, wenn ein für ein einzelnes Gelenk definierter Bereich verlassen wird. Dabei wird unter Ausnutzung des redundanten Freiheitsgrades derart verfahren, dass der Werkzeugmittelpunkt des Manipulators nicht in Folge der Anpassung verfahren oder bewegt wird, jedenfalls nicht derart, dass der Arbeitsprozess gestört wird. Folglich kann der Bediener ungestört weiter arbeiten, ohne die Haltung des Manipulators zu überwachen und ohne durch die beschriebene Bewegungsanpassung seine Arbeit unterbrechen zu müssen.

Das erfindungsgemäße Manipulatorsystem - umfassend einen handgeführten mehrachsigen Manipulator, insbesondere einen Gelenkarmroboter, dessen Achsen mit Momentsensoren zur Erfassung der an den Achsen wirkenden Drehmomente versehen sind, wobei der Manipulator mindestens einen redundanten Freiheitsgrad hat und einen Werkzeugmittelpunkt aufweist - ist mit einer Steuervorrichtung versehen, die zur Durchführung des erfindungsgemäßen Verfahrens eingerichtet ist, um die beschriebenen Verfahrensschritte ausführen zu können.

### 4. Ausführungsbeispiele

Im Folgenden wir die Erfindung unter Bezugnahme auf die beigefügten Figuren genauer erläutert. Hierbei zeigt:
Fig. 1 einen mehrgliedrigen Gelenkarmroboter mit kraftgeregelten Achsen I - VII;
Fig. 2 den Roboter aus Fig. 1 in einer anderen Haltung;
Fig. 3 ein Flussdiagramm, welches schematisch und beispielhaft den Ablauf des erfindungsgemäßen Verfahrens darlegt.

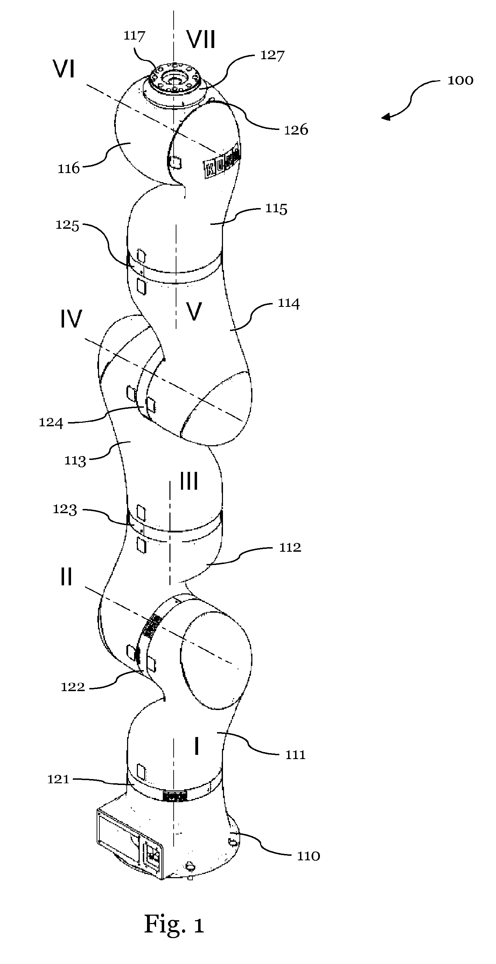

Die Fig. 1 zeigt einen mehrgliedrigen Manipulator, nämlich einen Gelenkarmroboter 100 in einer Streckstellung und verdeutlicht die Ausbildung der Glieder bzw. Arme 111, 112, 113, 114, 115, 116 und der angetriebenen und steuerbaren bzw. regelbaren Achsen I - VII. Bei dem beispielhaft dargestellten Roboter 100 handelt es sich um einen Leichtbauroboter des Typs KUKA LBR III, welcher mittels einem Fuß 110 ortsfest installiert ist. An dem Handflansch 117 des Roboters 100 kann ein Endeffektor montiert werden. Der Fachmann versteht, dass durch einen Endeffektor ebenfalls ein Werkzeugmittelpunkt gegeben ist. Die einzelnen Elemente 110, 111, 112, 113, 114, 115, 116, 117 des dargestellten Roboters 100 sind durch Gelenke 121, 122, 123, 124, 125, 126, 127 miteinander verbunden, wobei sich die Gelenke unabhängig voneinander bewegen können. Der dargestellte Roboter 100 weist sieben Drehachsen I - VII auf. Folglich ist eine dieser Achsen als redundant anzusehen im Vergleich zu einem ausreichend deterministischen 6 DOF System. Während die Achsen I - III das Schultergelenk des dargestellten Roboters 100 ausbilden, und Achsen V - VII ein entsprechendes Handgelenk abbilden, kann die Achse IV und das entsprechende Gelenk 124 als das redundante oder Ellenbogengelenk des Roboters 100 betrachtet werden.

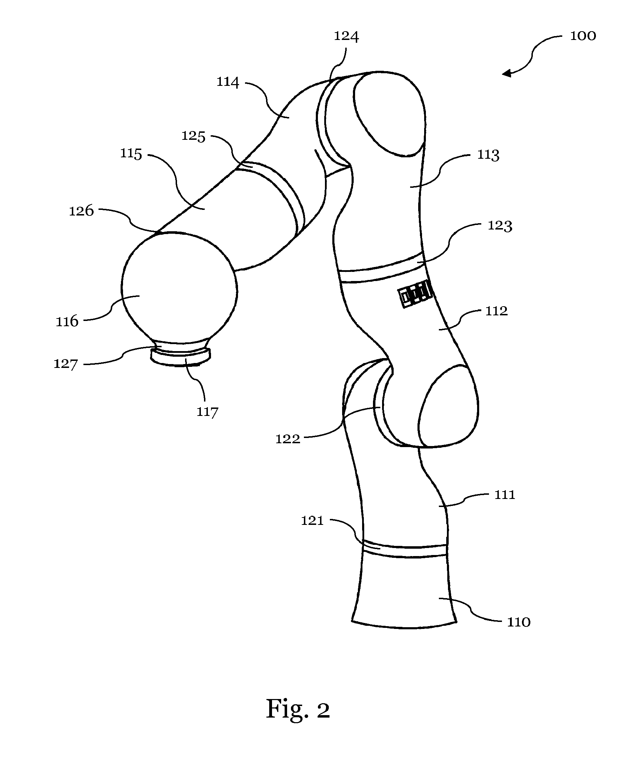

Die Fig. 2 zeigt den Roboter 100 in einer anderen Haltung. Im Gegensatz zu der in Fig. 1 dargestellten Haltung ist das Ellenbogengelenk nun deutlich geknickt, und stellt den höchsten Punkt des Roboters 100 dar. Wenn ein Bediener den Roboter 100 direkt an dem Handflansch 117 führt, kann der Roboter 100 entsprechend der handgeführten Bewegung reagieren und der Führung folgen. Aufgrund der redundanten Achse ist es dabei allerdings möglich, dass das Ellenbogengelenk 124 nach unten abkippt und dabei möglicherweise mit dem Bediener kollidieren kann. Eine derart redundante Bewegung des Ellenbogengelenks in Abhängigkeit von dem vor- und nachgeschaltetem Gelenk lässt sich dabei durch eine Veränderung des sog. Ellenbogenwinkels beschreiben. Durch das erfindungsgemäße Verfahren kann eine unvorteilhafte Änderung des Ellenbogenwinkels vermieden werden. Der Fachmann versteht dabei, dass das erfindungsgemäße Verfahren auch auf andere Winkel oder Gelenke angewendet werden kann, insbesondere, wenn ein Gelenkarmroboter mit mehr als sieben Achsen vorliegt.

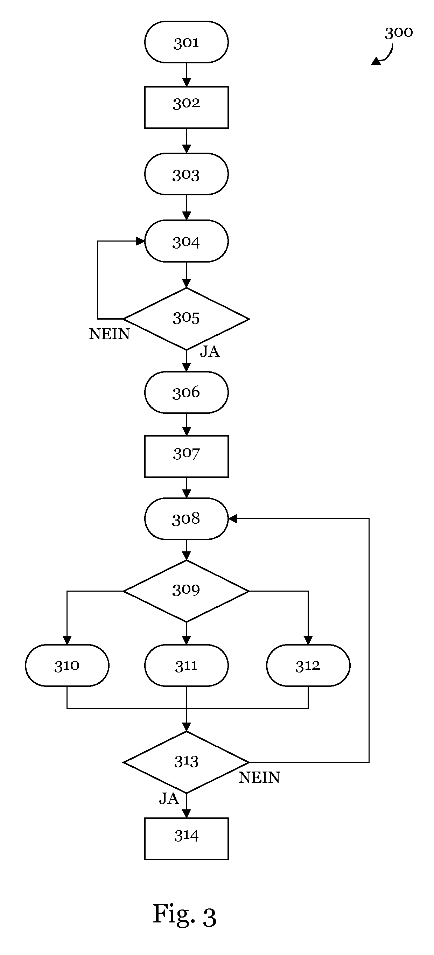

Die Fig. 3 zeigt ein Ablaufdiagramm zur Durchführung eines erfindungsgemäßen Verfahrens 300. Dabei wird exemplarisch Bezug auf das Ellenbogengelenk eines Manipulators genommen, welches mittels dem Verfahren so gesteuert werden soll, dass einem Entfernen des Gelenks von einem definierten Bereich entgegengewirkt wird, ohne dass der Werkzeugmittelpunkt durch eine entsprechende Reaktion bewegt wird. Das Verfahren beginnt im Schritt 301, in welchem der Bereich (bzw. der Arbeitsbereich oder Arbeitsraum) für das Ellenbogengelenk definiert wird. Im Schritt 302 weist der Manipulator eine derartige Haltung auf, bei der sich das Ellenbogengelenk des Manipulators in dem für das Gelenk definierten Bereich befindet. Im Schritt 303 kann eine Bedingung formuliert werden, wie beispielsweise ein Unterschreiten eines räumlichen Abstandes des Ellenbogengelenks zur Arbeitsraumgrenze.

Im Schritt 304 nähert sich das Ellenbogengelenk des Manipulators der Grenze des definierten Bereichs. Diese Annäherung erfolgt dabei in Reaktion auf die handgeführte Bewegung des Manipulators. Bei der Entscheidung 305 wird geprüft, ob das Ellenbogengelenk eine Grenze des für das Gelenk definierten Bereichs erreicht hat. Alternativ kann bei der Entscheidung 305 geprüft werden, ob die in Schritt 303 definierte Bedingung erfüllt ist.

Falls die Prüfung 305 positiv beurteilt ist, wird im Schritt 306 eine taktsynchrone Nachricht mit Systeminformation bereitgestellt. Diese Systeminformationen können unter anderem die aktuelle Position des Manipulators und des Ellenbogens bzw. den aktuellen Ellenbogenwinkel, als auch die Kräfte und/oder Momente in den einzelnen Gelenken beinhalten.

Zum Zeitpunkt 307 befindet sich das Ellenbogengelenk des Manipulators an der Grenze des definierten Arbeitsbereichs. Im Schritt 308 wird eine Reaktionsstrategie ausgeführt. Diese Reaktionsstrategie kann gemäß der Entscheidung 309 aus einer oder mehrerer Reaktionen bestehen, und von den bereitgestellten Systeminformationen abhängen. So kann im Schritt 310 die Steifigkeit des Ellenbogengelenks erhöht werden. In anderen Worten wird der Ellenbogenwinkel zäh geschalten um ein weiteres Abfallen des Ellenbogenwinkels zu verhindern. Dabei kann in der Drehmomenten-Regelung die Steifigkeit des Ellenbogengelenks erhöht werden. Im Schritt 311 kann eine richtungsbezogene Kraftaufschaltung auf das Ellenbogengelenk erfolgen. Das Aufschalten eines Kraftimpulses erfolgt dabei taktsynchron, sodass das Ellenbogengelenk in den erlaubten Bereich zurückverfahren wird. Alternativ kann in Schritt 312 die kartesische Position des Ellenbogengelenks selber neu kommandiert werden, um eine gewünschte Position zu erreichen. Diese Variante ist insbesondere dann vorteilhaft, wenn durch die Überwachung des Ellenbogens vermieden werden soll, dass der Manipulator mit seiner Umgebung kollidiert.

Bei der Entscheidung 313 wird festgestellt, ob sich das Gelenk des Manipulators in dem definierten Bereich befindet. Zum Zeitpunkt 314 befindet sich das Ellenbogengelenk des Manipulators wieder innerhalb des für das Gelenk definierten Bereichs.

Der Fachmann versteht, dass die drei beschriebenen Reaktionsstrategien 310, 311 und 312 nur beispielhafte Reaktionen darstellen und andere mögliche Reaktionsstrategien gewählt werden können. Der Programmierer bzw. Bediener kann dabei selber entscheiden, welche Reaktionsstrategie anzuwenden ist und ob mehrere Strategien miteinander kombiniert werden sollen.

Vorzugsweise kann der Bediener durch Drücken eines entsprechenden Knopfes, an einen Medienflansch oder Werkzeug, eine Reaktion des Manipulators hervorrufen. Folglich ist das Anpassen der Bewegung des Manipulators manuell auslösbar, wobei die Anpassung selbst dann automatisch erfolgt. Beispielsweise kann der Bediener manuell eine Anpassung der Bewegung des Manipulators auslösen, worauf der Manipulator automatisch entsprechend reagiert, sodass einer Bewegung eines Gelenks durch eine Grenze des für das Gelenk definierten Bereichs hindurch entgegengewirkt wird, und ohne dass der Werkzeugmittelpunkt des Manipulators aufgrund des Entgegenwirkens verfahren wird.

Der Fachmann versteht, dass unterschiedliche Abwandlungen der beschriebenen Ausführungsformen möglich sind, da insbesondere der entsprechende Manipulator in der Zahl und Ausbildung seiner Glieder als auch seiner angetriebenen Achsen variieren kann. Der Manipulator kann dabei eine beliebige Zahl und Kombination von rotatorischen und/oder translatorischen Achsen aufweisen, sodass der Manipulator mindestens einen redundanten Freiheitsgrad aufweist.

### Bezugszeichenliste

- 100: Roboter
- 110: Roboterfuß
- 111, 112, 113, 114, 115, 116: Zwischenglied
- 117: Handflansch
- 121, 122, 123, 124, 125, 126, 127: Gelenk
- I, II, III, IV, V, VI, VII: Achsen

## Patentansprüche

1. Verfahren zum Steuern eines handgeführten mehrachsigen Manipulators, insbesondere Gelenkarmroboters (100), dessen Achsen mit Momentsensoren zur Erfassung der an den Achsen wirkenden Drehmomente versehen sind,
wobei der Manipulator (100) mindestens einen redundanten Freiheitsgrad hat, wobei der Manipulator (100) einen Werkzeugmittelpunkt aufweist,
aufweisend folgende Verfahrensschritte:
Definieren, für mindestens ein Gelenk (121, 122, 123, 124, 125, 126, 127) des Manipulator (100), eines Bereichs, in dem sich das Gelenk (121, 122, 123, 124, 125, 126, 127) des Manipulators (100) frei entsprechend der Gesamtbewegung des Manipulators (100) bewegen kann;
Führen des Werkzeugmittelpunktes des Manipulators (100) von Hand;
Feststellen, ob das Gelenk (121, 122, 123, 124, 125, 126, 127) eine Grenze des für das Gelenk (121, 122, 123, 124, 125, 126, 127) definierten Bereichs erreicht hat;
Anpassen der Bewegung des Manipulators (100) in Reaktion auf das Feststellen, dass das Gelenk (121, 122, 123, 124, 125, 126, 127) die Grenze des für das Gelenk (121, 122, 123, 124, 125, 126, 127) definierten Bereichs erreicht hat, sodass einer Bewegung des Gelenks (121, 122, 123, 124, 125, 126, 127) durch die Grenze hindurch entgegengewirkt wird, ohne dass der Werkzeugmittelpunkt des Roboters (100) aufgrund des Entgegenwirkens verfahren wird.

2. Verfahren nach Anspruch 1, wobei das Anpassen der Bewegung eine Veränderung der Steifigkeit der Gelenke (121, 122, 123, 124, 125, 126, 127) des Manipulators (100) und/oder ein Aufschalten einer Kraft umfasst.

3. Verfahren nach dem vorstehenden Anspruch, wobei das Anpassen der Bewegung das Gelenk (121, 122, 123, 124, 125, 126, 127) betrifft, welches eine Grenze des für das Gelenk (121, 122, 123, 124, 125, 126, 127) definierten Bereichs erreicht hat.

4. Verfahren nach einem der vorstehenden Ansprüche, wobei das Anpassen der Bewegung keine anderen Gelenke (121, 122, 123, 124, 125, 126, 127) betrifft.

5. Verfahren nach einem der vorstehenden Ansprüche, wobei der Manipulator (100) zumindest sechs Achsen A1 bis A6 aufweist und das Anpassen der Bewegung eine Veränderung der Steifigkeit der Gelenke (121, 122, 123, 124, 125, 126, 127) der Achsen A3 oder A4 des Manipulators (100) ist, wobei die Gelenke (121, 122, 123, 124, 125, 126, 127) der Achsen A3 oder A4 vorzugsweise ein Ellbogengelenk des Manipulators (100) definieren.

6. Verfahren nach einem der Ansprüche 1 bis 3, wobei das Anpassen der Bewegung eine Umbewegung des Gelenks (121, 122, 123, 124, 125, 126, 127) umfasst, welches die Grenze des für das Gelenk (121, 122, 123, 124, 125, 126, 127) definierten Bereichs erreicht hat.

7. Verfahren nach einem der vorstehenden Ansprüche, wobei das Feststellen ob sich ein Gelenk (121, 122, 123, 124, 125, 126, 127) des Manipulator (100) außerhalb des für das Gelenk (121, 122, 123, 124, 125, 126, 127) definierten Bereiches befindet ein Ermitteln steigender und/oder fallender Flanken umfasst.

8. Verfahren nach einem der vorstehenden Ansprüche, wobei das Feststellen durchgeführt wird, während der Manipulator (100) im kraftkompensierten Modus handgeführt wird.

9. Verfahren nach einem der vorstehenden Ansprüche, wobei das Anpassen der Bewegung des Manipulator (100) manuell auslösbar ist, und die Anpassung dann automatisch erfolgt.

10. Manipulatorsystem, umfassend einen handgeführten mehrachsigen Manipulator (100), insbesondere Gelenkarmroboter, dessen Achsen mit DrehMomentensensoren zur Erfassung der an den Achsen wirkenden Drehmomente versehen sind, wobei der Manipulator (100) mindestens einen redundanten Freiheitsgrad hat, wobei der Manipulator (100) einen Werkzeugmittelpunkt aufweist, und wobei das System mit einer Steuervorrichtung versehen ist, die zur Durchführung eines Verfahrens nach einem der Ansprüche 1-9 eingerichtet ist.
